# EUROPEAN PATENT SPECIFICATION

(11) **EP 4 455 101 B1**
(45) Date of publication and mention of the grant of the patent: **29.04.2026**
(21) Application number: 22910179.5
(22) Date of filing: 23.12.2022
(51) Int. Cl.: C03C 3/095, C03C 3/087, C03B 5/16, C03B 25/00, C03C 3/11

(54) **BORON-FREE ALUMINOSILICATE GLASS**
BORFREIES ALUMINOSILIKATGLAS
VERRE D'ALUMINOSILICATE EXEMPT DE BORE

(30) Priority: 24.12.2021 CN 202111599361
(43) Date of publication of application: 30.10.2024
(73) Proprietor: CNBM RESEARCH INSTITUTE FOR ADVANCED GLASS MATERIALS GROUP CO., LTD, Bengbu, Anhui 233010 (CN)
(72) Inventor: PENG, Shou, Bengbu, Anhui 233010 (CN); ZHANG, Chong, Bengbu, Anhui 233010 (CN); ZHAO, Fengyang, Bengbu, Anhui 233010 (CN); CUI, Jiedong, Bengbu, Anhui 233010 (CN); ZHONG, Zhaojin, Bengbu, Anhui 233010 (CN); WANG, Pingping, Bengbu, Anhui 233010 (CN); GAO, Qiang, Bengbu, Anhui 233010 (CN); WANG, Weiwei, Bengbu, Anhui 233010 (CN); HAN, Na, Bengbu, Anhui 233010 (CN); KE, Zhenkun, Bengbu, Anhui 233010 (CN); SHI, Lifen, Bengbu, Anhui 233010 (CN); YANG, Yong, Bengbu, Anhui 233010 (CN); LI, Changqing, Bengbu, Anhui 233010 (CN); ZHOU, Gang, Bengbu, Anhui 233010 (CN); CAO, Xin, Bengbu, Anhui 233010 (CN); NI, Jia, Bengbu, Anhui 233010 (CN); SHAN, Chuanli, Bengbu, Anhui 233010 (CN); LI, Jinwei, Bengbu, Anhui 233010 (CN)
(74) Representative: Canzler & Bergmeier Patentanwälte Partnerschaft mbB
(86) International application number: PCT/CN2022/141293
(87) International publication number: WO 2023/116868

(56) References cited:
- WO-A1-2017/120424
- CA-A1- 2 316 410
- CN-A- 102 249 542
- CN-A- 104 250 066
- CN-A- 113 661 148
- CN-A- 114 477 762
- CN-B- 101 808 951
- JP-A- 2006 265 001

## Description

### FIELD OF DISCLOSURE

The present disclosure belongs to the technical field of special glass and relates to a boron-free aluminosilicate glass.

### DESCRIPTION OF RELATED ARTS

Aluminosilicate glass, with its high transparency, high strength, and high hardness, is rapidly developing in the aviation, construction, and information display industries. Particularly, with the rapid popularity of smartphones, tablets, and other touch input devices, screen protection has become a growing concern, leading to increased demand for screen protection materials from users. Capacitive touch screens are mainly composed of a glass substrate coated with a conductive film and an outermost glass cover. The outermost cover glass plays a role in protecting the display and internal precision components from damage and needs to have the following characteristics: 1) high impact resistance; 2) high hardness and wear resistance, not easily scratched; 3) high transmittance; 4) thin and lightweight; 5) non-toxic and pollution-free components.

Due to the development of thinner and lighter cover glass, there are higher demands on the mechanical properties of cover glass. Typically, boron oxide is added to the existing aluminosilicate glass. The addition of boron can act as a flux, accelerating the melting and clarification of glass during the high-temperature stage, effectively reducing the viscosity and surface tension of the molten glass at high temperatures. However, boron oxide also has a certain volatility. The volatilization of boron oxide can lead to crystallization in the molten glass. Additionally, the addition of boron oxide can reduce the strain point of the glass and make the elastic modulus of the glass in a relative low level. WO2017120424A1 discloses boro-aluminosilicate glasses for display cover applications. CN101808951B and CA2316410A1 disclose compositional solutions for the clarification and fining of molten glasses.

### SUMMARY OF THE PRESENT INVENTION

The present disclosure provides a boron-free aluminosilicate glass, to solve the problems of low strain point, low elastic modulus, and glass defects in aluminosilicate glass due to the addition of boron.

The technical solution of the present disclosure is as follows:

The technical solution of the present disclosure is as follows:

A boron-free aluminosilicate glass, comprising the following components in weight percentage: SiO₂ 57.5~68.5wt%, Al₂O₃ 14.5~21.5wt%, R₂O 9.5~15.5wt%, RO 3.5~8wt%, Yb₂O₃ 0.02~0.25wt%, SrCl₂ 0.05~0.45wt%, SnO₂ 0.02~0.40wt%, Na₂SO₄ 0.05~0.60wt%;
wherein Al₂O₃/(Al₂O₃+ SiO₂)<0.25;
wherein R₂O is two or more of Li₂O, Na₂O, and K₂O, and the ratio of the mass of Li₂O to the mass of R₂O is 0.1~0.3;
wherein RO is one or more of CaO and MgO, and the ratio of the mass of MgO to the mass of RO is greater than 0.60;
wherein the mass ratio of Yb₂O₃ to SrCl₂ is 1:1.5~3;
wherein the mass ratio of SnO₂ to Na₂SO₄ is 1:1~2.

Further, the boron-free aluminosilicate glass comprises the following components in weight percentage: SiO₂ 58.5~67.5wt%, Al₂O₃ 15~21wt%, R₂O 10~15wt%, RO 3.8 ~7.8wt%, SrCl₂ 0.08~0.35wt%, Yb₂O₃ 0.05~0.18wt%, SnO₂ 0.05~0.35wt%, Na₂SO₄ 0.10~0.55wt%;
wherein Al₂O₃/(Al₂O₃+ SiO₂) = 0.15~0.25;
wherein R₂O is two or more of Li₂O, Na₂O, and K₂O, and the ratio of the mass of Li₂O to the mass of R₂O is 0.15~0.25;
wherein RO is one or more of CaO and MgO, and the ratio of the mass of MgO to the mass of RO = 0.65~0.85;
wherein the mass ratio of Yb₂O₃ to SrCl₂ is 1:2~2.5;
wherein the mass ratio of SnO₂ to Na₂SO₄ is 1:1~1.5.

Further, the boron-free aluminosilicate glass has a melting temperature of 1580~ 1620°C, an annealing temperature of 500~650°C.

Further, the boron-free aluminum silicate glass has an elasticity modulus greater than 83 GPa, a strain point greater than 650°C, a density less than 2.55g/cm³, and a transmittance at 550nm no less than 91.55%.

The inventors found that, in the SiO₂-Al₂O₃-R₂O-RO system described in the present disclosure, SiO₂ and Al₂O₃ have high content levels and B₂O₃ is not included, ensuring a high strain point and elastic modulus. Additionally, the addition of Li₂O to replace part of Na₂O and K₂O can further increase the glass strain point and elastic modulus. However, if the amount of Li₂O added is too high, it can increase crystallization defects in the glass. Therefore, in the SiO₂-Al₂O₃-R₂O-RO system described in the present disclosure, the mass ratio of Li₂O to R₂O is controlled to be between 0.1 and 0.3 to regulate the content of Li₂O.

Adjusting the alkali metal content alone is not sufficient to resolve the melting difficulties caused by the absence of boron. The inventors found that adding fluxing agents to the SiO₂-Al₂O₃-R₂O-RO glass system in the following proportions can address this issue: Yb₂O₃ 0.02~0.25wt%, SrCl₂ 0.05~0.45wt%, and the mass ratio of Yb₂O₃ to SrCl₂ = 1:1.5~3. While the addition of fluxing agents reduces melting difficulties, it can also increase the formation of tiny bubbles in the molten glass, leading to defects and affecting the glass's transmittance. Therefore, fluxing agents need to be used in conjunction with clarifying agents to achieve optimal results. The clarifying agent comprises SnO₂ 0.02~ 0.40wt% and Na₂SO₄ 0.05~0.60wt%, with a mass ratio of SnO₂ to Na₂SO₄ between 1:1 to 1:2. Implementing the above technical solutions together can maintain the glass's high elastic modulus and strain point while making it easier to melt and clarify, and reducing bubbles in the molten glass.

The advantages of the present disclosure are as follows: in the glass melting process described in the present disclosure, there are no bubbles larger than 0.1 mm. The glass exhibits excellent properties, including good visible light transmittance, high strain point and elastic modulus, and low density. These characteristics make it suitable for use in electronic information displays, rail transit, screen protection, and aerospace glass. The boron-free aluminosilicate glass has an elastic modulus greater than 83 GPa, a strain point higher than 650°C, a density less than 2.55 g/cm³, and a transmittance at 550 nm of no less than 91.55%.

### DETAILED DESCRIPTION OF THE EMBODIMENTS

The present disclosure provides a boron-free aluminosilicate glass, and the method for preparing the boron-free aluminosilicate glass is follows:

According to the weight percentages in Table 1, the raw materials are put into the glass melting furnace for melting and clarifying treatment at a temperature of 1600-1640°C. The molten glass is then formed and annealed at an annealing temperature of 500-650°C, resulting in the aluminosilicate glass.

The aluminosilicate glass prepared by this method has no bubbles larger than 0.1 mm. The glass exhibits excellent properties, including good visible light transmittance, high strain point and elastic modulus, and low density. These characteristics make it suitable for use in electronic information displays, rail transit, screen protection, and aerospace glass.

The present disclosure provides the performance indicators of the glass from Embodiments 1 to 6 and the Comparative examples, as shown in Table 1.

**Table 1 Glass performance indicators of the glass from Embodiments 1 to 6 and Comparative examples 1 to 5:**

| Components (wt.%) | Embodiment 1 | Embodiment 2 | Embodiment 3 | Embodiment 4 | Embodiment 5 | Embodiment 6 | Comparative example 1 | Comparative example 2 | Comparative example 3 | Comparative example 4 | Comparative example 5 |
|---|---|---|---|---|---|---|---|---|---|---|---|
| SiO₂ | 59.5 | 61.5 | 63.5 | 65.5 | 66 | 66.5 | 63.5 | 64.5 | 64.5 | 66 | 68 |
| Al₂O₃ | 20.5 | 17.5 | 15.5 | 15.5 | 16 | 15 | 17.5 | 15.5 | 16.5 | 16 | 14 |
| Na₂O | 6 | 7 | 7.5 | 8 | 5.5 | 5.5 | 5.5 | 7 | 5 | 7.5 | 6 |
| K₂O | 3.2 | 2.8 | 4 | 3 | 2 | 3.4 | 4.5 | 3.5 | 3.8 | 2.5 | 3.5 |
| Li₂O | 2.55 | 3 | 2 | 3.25 | 2.85 | 1.25 | 0 | 3.5 | 3.5 | 0 | 2 |
| MgO | 6 | 5.8 | 5.2 | 3.3 | 5.5 | 5 | 6 | 3.5 | 3.8 | 5.85 | 4.2 |
| CaO | 1.1 | 1.5 | 1.2 | 1.1 | 1.8 | 2.5 | 3 | 2.5 | 2.5 | 1.8 | 1 |
| Yb₂O₃ | 0.1 | 0.15 | 0.2 | 0.05 | 0.05 | 0.25 | 0 | 0 | 0.15 | 0.05 | 0.2 |
| SrCl₂ | 0.2 | 0.25 | 0.3 | 0.15 | 0.1 | 0.4 | 0 | 0 | 0.25 | 0.1 | 0.3 |
| SnO₂ | 0.3 | 0.2 | 0.25 | 0.05 | 0.08 | 0.1 | 0 | 0 | 0 | 0.08 | 0.4 |
| Na₂SO₄ | 0.55 | 0.3 | 0.35 | 0.1 | 0.12 | 0.1 | 0 | 0 | 0 | 0.12 | 0.4 |
| coefficient of thermal expansion (×10⁻⁶/°C) | 3.61 | 3.63 | 3.65 | 3.67 | 3.65 | 3.69 | 3.82 | 3.86 | 3.89 | 3.85 | 3.75 |
| elastic modulus GPa | 83.8 | 83.6 | 83.2 | 83.3 | 83.5 | 83.6 | 79.5 | 83.1 | 83.3 | 80.9 | 82.9 |
| visible light transmittance (%) | 92.6 | 92.5 | 92.4 | 92.7 | 92.3 | 92.5 | 91.1 | 91.3 | 91.8 | 92.1 | 91.9 |
| strain point (°C) | 656.5 | 655.2 | 654.8 | 655.9 | 656.2 | 659.1 | 629.1 | 651.7 | 651.5 | 633.5 | 639.8 |
| density (g/cm³) | 2.48 | 2.49 | 2.50 | 2.48 | 2.46 | 2.45 | 2.55 | 2.54 | 2.53 | 2.49 | 2.47 |
| number of bubbles larger than 0.1mm in diameter per unit area (pcs/cm²) | 0 | 0 | 0 | 0 | 0 | 0 | 2 | 3 | 3 | 0 | 3 |

The above descriptions are merely preferred embodiments of the present disclosure and are not intended to limit the invention in any form. Any technician familiar with this field can make many possible variations and modifications to the technical solution of the present disclosure, using the disclosed methods and technical content without departing from the scope of the claims.

## Claims

1. A boron-free aluminosilicate glass, comprising the following components in weight percentage: SiO₂ 57.5~68.5wt%, Al₂O₃ 14.5~21.5wt%, R₂O 9.5~15.5wt%, RO 3.5~8wt%, Yb₂O₃ 0.02~0.25wt%, SrCl₂ 0.05~0.45wt%, SnO₂ 0.02~0.40wt%, Na₂SO₄ 0.05~0.60wt%;
wherein Al₂O₃/(Al₂O₃+SiO₂)<0.25;
wherein R₂O is a two or more of Li₂O, Na₂O, and K₂O, and a ratio of the mass of Li₂O to the mass of R₂O is 0.1~0.3;
wherein RO is one or more of CaO and MgO, and a ratio of the mass of MgO to the mass of RO is greater than 0.6;
wherein a mass ratio of Yb₂O₃ to SrCl₂ is 1:1.5~3; and
wherein a mass ratio of SnO₂ to Na₂SO₄ is 1:1~2.

2. The boron-free aluminosilicate glass according to claim 1, comprising the following components in weight percentage: SiO₂ 58.5~67.5wt%, Al₂O₃ 15~21wt%, R₂O 10~15wt%, RO 3.8~7.8wt%, Yb₂O₃ 0.05~0.18wt%, SrCl₂ 0.08~0.35wt%, SnO₂ 0.05~0.35wt%, Na₂SO₄ 0.10~0.55wt%;
wherein Al₂O₃/(Al₂O₃+SiO₂) = 0.15~0.25;
wherein R₂O is two or more of Li₂O, Na₂O, and K₂O, and the ratio of the mass of Li₂O to the mass of R₂O is 0.15~0.25;
wherein RO is one or more of CaO and MgO, and the ratio of the mass of MgO to the mass of RO is 0.65~0.85;
wherein the mass ratio of Yb₂O₃ to SrCl₂ is 1:2~2.5; and
wherein the mass ratio of SnO₂ to Na₂SO₄ is 1:1~1.5.

3. The boron-free aluminosilicate glass according to claim 1 or 2, wherein the boron-free aluminosilicate glass has a melting temperature of 1580~1620°C and an annealing temperature of 500~650°C.

4. The boron-free aluminosilicate glass according to claim 1 or 2, wherein the boron-free aluminosilicate glass has an elastic modulus greater than 83 GPa, a strain point of higher than 650°C, a density less than 2.55g/cm³, and a transmittance at 550 nm no less than 91.55%.

## Patentansprüche

1. Borfreies Aluminosilikatglas, umfassend die folgenden Komponenten in Gewichtsprozent: SiO₂ 57,5~68,5 Gew.-%, Al₂O₃ 14,5~21,5 Gew.-%, R₂O 9,5~15,5 Gew.-%, RO 3,5-8 Gew.-%, Yb₂O₃ 0,02~0,25 Gew.-%, SrCl₂ 0,05~0,45 Gew.-%, SnO₂ 0,02~0,40 Gew.-%, Na₂SO₄ 0,05~0,60 Gew.-%;
wobei Al₂O₃/(Al₂O₃+SiO₂)<0,25;
wobei R₂O zwei oder mehr von Li₂O, Na₂O und K₂O ist und ein Verhältnis der Masse von Li₂O zu der Masse von R₂O 0,1~0,3 ist;
wobei RO eines oder mehrere von CaO und MgO ist und ein Verhältnis der Masse von MgO zu der Masse von RO größer als 0,6 ist;
wobei ein Massenverhältnis von Yb₂O₃ zu SrCl₂ 1:1,5~3 ist; und
wobei ein Massenverhältnis von SnO₂ zu Na₂SO₄ 1:1~2 ist.

2. Borfreies Aluminosilikatglas nach Anspruch 1, umfassend die folgenden Komponenten in Gewichtsprozent: SiO₂ 58,5~67,5 Gew.-%, Al₂O₃ 15-21 Gew.-%, R₂O 10-15 Gew.-%, RO 3,8~7,8 Gew.-%, Yb₂O₃ 0,05~0,18 Gew.-%, SrCl₂ 0,08~0,35 Gew.-%, SnO₂ 0,05~0,35 Gew.-%, Na₂SO₄ 0,10~0,55 Gew.-%;
wobei Al₂O₃/(Al₂O₃+SiO₂) = 0,15-0,25;
wobei R₂O zwei oder mehr von Li₂O, Na₂O und K₂O ist und das Verhältnis der Masse von Li₂O zu der Masse von R₂O 0,15~0,25 ist;
wobei RO eines oder mehrere von CaO und MgO ist und das Verhältnis der Masse von MgO zu der Masse von RO 0,65~0,85 ist;
wobei das Massenverhältnis von Yb₂O₃ zu SrCl₂ 1:2-2,5 ist; und
wobei das Massenverhältnis von SnO₂ zu Na₂SO₄ 1:1-1,5 ist.

3. Borfreies Aluminosilikatglas nach Anspruch 1 oder 2, wobei das borfreie Aluminosilikatglas eine Schmelztemperatur von 1580-1620°C und eine Glühtemperatur von 500-650°C hat.

4. Borfreies Aluminosilikatglas nach Anspruch 1 oder 2, wobei das borfreie Aluminosilikatglas einen Elastizitätsmodul von mehr als 83 GPa, einen Dehnungspunkt von mehr als 650°C, eine Dichte von weniger als 2,55 g/cm³ und eine Durchlässigkeit bei 550 nm von nicht weniger als 91,55% hat.

## Revendications

1. Verre d'aluminosilicate exempt de bore, comprenant les composants suivants en pourcentage en poids : SiO₂ 57,5 à 68,5 % en poids, Al₂O₃ 14,5 à 21,5 % en poids, R₂O 9,5 à 15,5 % en poids, RO 3,5 à 8 % en poids, Yb₂O₃ 0,02 à 0,25 % en poids, SrCl₂ 0,05 à 0,45 % en poids, SnO₂ 0,02 à 0,40 % en poids, Na₂SO₄ 0,05 à 0,60 % en poids ;
dans lequel Al₂O₃/(Al₂O₃+SiO₂) < 0,25 ;
dans lequel R₂O est un ou plusieurs parmi Li₂O, Na₂O et K₂O, et un rapport de la masse de Li₂O à la masse de R₂O est de 0,1 à 0,3 ;
dans lequel RO est un ou plusieurs parmi CaO et MgO, et un rapport de la masse de MgO à la masse de RO est supérieur à 0,6 ;
dans lequel un rapport en masse de Yb₂O₃ à SrCl₂ est de 1:1,5 à 3 ; et dans lequel un rapport en masse de SnO₂ à Na₂SO₄ est de 1:1 à 2.

2. Verre d'aluminosilicate exempt de bore selon la revendication 1, comprenant les composants suivants en pourcentage en poids : SiO₂ 58,5 à 67,5 % en poids, Al₂O₃ 15 à 21 % en poids, R₂O 10 à 15 % en poids, RO 3,8 à 7,8 % en poids, Yb₂O₃ 0,05 à 0,18 % en poids, SrCl₂ 0,08 à 0,35 % en poids, SnO₂ 0,05 à 0,35 % en poids, Na₂SO₄ 0,10 à 0,55 % en poids ;
dans lequel Al₂O₃/(Al₂O₃+SiO₂) = 0,15 à 0,25 ;
dans lequel R₂O est un ou plusieurs parmi Li₂O, Na₂O et K₂O, et le rapport de la masse de Li₂O à la masse de R₂O est de 0,15 à 0,25 ;
dans lequel RO est un ou plusieurs parmi CaO et MgO, et le rapport de la masse de MgO à la masse de RO est de 0,65 à 0,85 ;
dans lequel le rapport en masse de Yb₂O₃ à SrCl₂ est de 1:2 à 2,5 ; et dans lequel le rapport en masse de SnO₂ à Na₂SO₄ est de 1:1 à 1,5.

3. Verre d'aluminosilicate exempt de bore selon la revendication 1 ou 2, dans lequel le verre d'aluminosilicate exempt de bore a une température de fusion de 1580 à 1620 °C et une température de recuit de 500 à 650 °C.

4. Verre d'aluminosilicate exempt de bore selon la revendication 1 ou 2, dans lequel le verre d'aluminosilicate exempt de bore a un module d'élasticité supérieur à 83 GPa, un point de déformation supérieur à 650 °C, une densité inférieure à 2,55 g/cm³ , et une transmittance à 550 nm non inférieure à 91,55 %.
